# EUROPEAN PATENT APPLICATION

(11) **EP 4 530 534 A1**
(43) Date of publication of application: **02.04.2025**
(21) Application number: 23315369.1
(22) Date of filing: 27.09.2023
(51) Int. Cl.: F24C 7/08, H05B 6/64

(54) **CORE PROBE ASSEMBLY**

(71) Applicant: Illinois Tool Works Inc., Glenview, IL 60025 (US)
(72) Inventor: LAGET, Fabrice, Glenview IL Illinois 60025 (US); GUYON, Jérôme, Glenview IL Illinois 60025 (US)
(74) Representative: HGF

(57) **Abstract**

The invention relates to a core probe assembly (10) for use in a cooking appliance (100), the core probe assembly (10) comprising: a core probe (20) and a cable (30); wherein the cable (30) comprises a connector (40) for connection with a control unit (120) of a cooking appliance (100). The probe assembly (10) further comprises a mounting (50) overmolded on the cable (30) between its ends (32, 34), wherein the mounting (50) is configured to be removably attached to an internal wall (112) of a cooking cavity (110) such that, in use, the cable (30) extends from an inside of the cooking cavity (110) to an outside of the cooking cavity (110) via the mounting (50).

## Description

### Technical field of the invention

This invention relates generally to a core probe assembly. More specifically, although not exclusively, this invention relates to a core probe assembly for use in a cooking appliance, such as an oven or a braising pan, and a cooking appliance comprising a core probe assembly.

### Technical background

Modern cooking appliances, for example ovens and braising pans, are often provided with a core probe assembly, sometimes referred to as a food sensor, food probe or a meat probe, that is an integrated cooking thermometer configured to measure the core temperature of food as it is being cooked.

In commercial kitchens, these core probe assemblies experience frequent use and, as such, are frequently exposed to the harsh environment of a cooking cavity. In the event of failure of one of more components of the core probe assembly, replacement is often a complex and time consuming task. In some cases, the core probe assembly may be connected to a port outside of the cooking appliance, and therefore may pass through an opening in or around an oven door or braising pan lid which can alter the air-tightness of the cooking cavity.

### Summary of the invention

It is therefore a first non-exclusive object of the invention to provide a core probe assembly that benefits from improved resistance to the cooking cavity environment and that can be easily replaced in the event of component failure.

In accordance with the present invention a core probe assembly for use in a cooking appliance is provided, the core probe assembly comprising: a core probe and a cable; wherein the core probe comprises an insertion end at a first end and a second end connected the cable; wherein the cable comprises a first end connected to the second end of the core probe and a second end comprising a connector for connection with a control unit of a cooking appliance, in use; wherein the core probe assembly further comprises a mounting overmolded on the cable between its ends, wherein the mounting is configured to be removably attached to an internal wall of a cooking cavity such that, in use, the cable extends from an inside of the cooking cavity to an outside of the cooking cavity via the mounting.

The cooking appliance may comprise an oven or a braising pan. The cooking cavity may comprise an oven cavity.

The mounting may comprise a seal or gasket on a side configured to face an internal wall of a cooking cavity. The mounting may comprise a seal or gasket on an outer side or a wall facing side.

The mounting may be formed of plastic.

The mounting may be unitary, integral or formed of a single-piece.

The mounting may comprise a cable guide portion. More specifically, the cable guide portion may be configured to guide or direct the cable through an opening in an internal wall of the cooking cavity from inside the cooking cavity to outside the cooking cavity. The cable guide portion may be configured to direct or redirect the cable or a portion thereof.

The cable guide portion may be arranged such that a first portion of the cable extending from one side of the cable guide portion and a second portion of the cable extending from another side of the cable guide portion extend substantially orthogonal to one another.

The cable guide portion may be arranged such that a first portion of the cable extending between the mounting and the connector and a second portion of the cable extending between the mounting and the probe extend substantially orthogonal to one another.

The mounting may comprise one or more flanges having a respective aperture extending therethrough, wherein each aperture is arranged to receive a fixing configured to attach the mounting to an internal wall of a cooking cavity, in use
The mounting may comprise a pair of flanges. The pair of flanges may comprise a respective flange located on either side of the cable guide portion.

The mounting may comprise one or more flanges. More specifically, each flange may have a respective aperture extending therethrough. Each aperture may be in receipt of a fixing configured to attach the mounting to an internal wall of a cooking cavity, in use.

The or each fixing may comprise a screw.

The mounting may comprise one or more magnetic elements configured to attach the mounting to an internal wall of a cooking cavity, in use.

The core probe may comprise a temperature sensor. The core probe may comprise at least one temperature sensor. The core probe may comprise a plurality of temperature sensors.

The core probe may be configured to be located inside of a cooking cavity, in use.

The core probe may comprise or be formed of stainless steel.

The core probe assembly may comprise a handle overmolded across the connection between the core probe and the cable.

The core probe assembly may comprise a handle overmolded across the interface between the core probe and the cable.

The handle may be overmolded over the first end of the cable and the second end of the core probe.

The handle may be arranged such that a first portion of the cable extending from the handle, and the core probe extend substantially orthogonal to one another.

The handle may be formed of plastic. The handle and the mounting may each be formed of plastic. The handle and the mounting may be formed of the same material, e.g. the same plastic. The plastic may be or may comprise a high-performance thermoplastic.

The connector may be configured to be removably or detachably connected with a control unit of a cooking appliance. The connector may be removable or detachable, e.g. from a control unit of a cooking appliance. The connector may be a male connector or a female connector. The connector may be configured to be received, e.g. removably, within a corresponding female connector or male connector of a control unit of a cooking appliance.

According to another aspect of the invention, there is provided an cooking appliance comprising a core probe assembly as described above.

Another aspect of the invention provides a cooking appliance comprising: a cooking cavity having an opening extending through an internal wall thereof; and a core probe assembly comprising: a core probe having an insertion end at a first end and a second end connected to a cable; wherein the cable is configured to connect the core probe to a control unit of the cooking appliance; and a mounting overmolded on the cable; wherein the mounting is removably attached to the internal wall of the cooking cavity such that the cable extends through the opening from inside the cooking cavity to outside the cooking cavity via the mounting.

Another aspect of the invention provides a cooking appliance comprising: a cooking cavity having an opening extending through an internal wall thereof; and a core probe assembly as described above; wherein the mounting is removably attached to the internal wall of the cooking cavity such that the cable extends through the opening from inside the cooking cavity to outside the cooking cavity via the mounting.

The cooking appliance may comprise an oven or a braising pan. The cooking cavity may comprise an oven cavity.

The mounting may comprise a seal or gasket located between the mounting and the internal wall of the cooking cavity.

The mounting may comprise a cable guide portion. The cable guide portion may be configured to guide the cable through the opening from inside the cooking cavity to outside the cooking cavity.

The cable guide portion may be configured to direct or redirect the cable or a portion thereof.

The cable guide portion may be arranged such that a first portion of the cable extending from the cable guide portion and located inside the cooking cavity and a second portion of the cable extending from the cable guide portion and through the opening extend substantially orthogonal to one another.

The cable guide portion may be arranged such that a first portion of the cable extending from one side of the cable guide portion and a second portion of the cable extending from another side of the cable guide portion extend substantially orthogonal to one another.

The cable guide portion may be arranged such that a first portion of the cable extending between the mounting and the connector and a second portion of the cable extending between the mounting and the core probe extend substantially orthogonal to one another.

The second portion may be located inside the cooking cavity.

The mounting may comprise one or more flanges having a respective aperture extending therethrough, wherein each aperture is in receipt of a fixing to attach the mounting to the internal wall.

The or each fixing may comprise a screw
A first end of the cable may be connected to the second end of the core probe and a second end of the cable may be located outside of the cooking cavity and may comprise a connector for connection with a control unit of the oven

The core probe may be located inside the cooking cavity.

The core probe may comprise a temperature sensor. The core probe may comprise at least one temperature sensor. The core probe may comprise a plurality of temperature sensors.

The mounting may be located between the ends of the cable.

The core probe assembly may comprise a handle overmolded across the connection or interface between the core probe and the cable. The handle may be overmolded over the first end of the cable and the second end of the core probe.

The handle may be arranged such that a first portion of the cable extending from the handle, and the core probe extend substantially orthogonal to one another.

The connector may be removably or detachably connected to the control unit of the cooking appliance. The connector may be a male connector or a female connector. The control unit of the cooking appliance may comprise a corresponding female connector or male connector.

For the avoidance of doubt, any of the features described herein apply equally to any aspect of the invention. For example, the core probe assembly may comprise any one or more features of the cooking appliance relevant to the core probe assembly and vice-versa.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. For the avoidance of doubt, the terms "may", "and/or", "e.g.", "for example" and any similar term as used herein should be interpreted as non-limiting such that any feature so-described need not be present. Indeed, any combination of optional features is expressly envisaged without departing from the scope of the invention, whether or not these are expressly claimed. The applicant reserves the right to change any originally filed claim or file any new claim accordingly, including the right to amend any originally filed claim to depend from and/or incorporate any feature of any other claim although not originally claimed in that manner.

### Brief description of the figures

Embodiments of the invention will now be described by way of example only with reference to the accompanying drawings in which:
Figure 1 is a front view of a core probe assembly in accordance with the present invention;
Figure 2 is a perspective view of a first side of the handle and core probe of the core probe assembly of Figure 1;
Figure 3 is a further perspective view of a second side of the handle and core probe of Figure 2;
Figure 4 is a front perspective view of a mounting of the core probe assembly of Figure 1;
Figure 5 is a rear perspective view of the mounting of Figure 4;

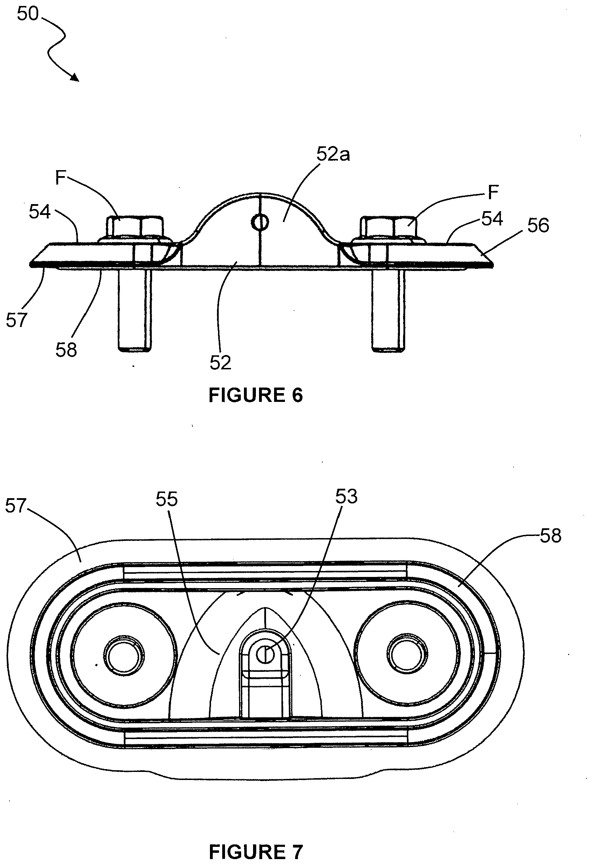

Figure 6 is a bottom view of the mounting of Figure 4;
Figure 7 is a rear view of the mounting of Figure 4;
Figure 8 is a front view of an oven including the core probe assembly of Figure 1.

### Detailed description of the invention

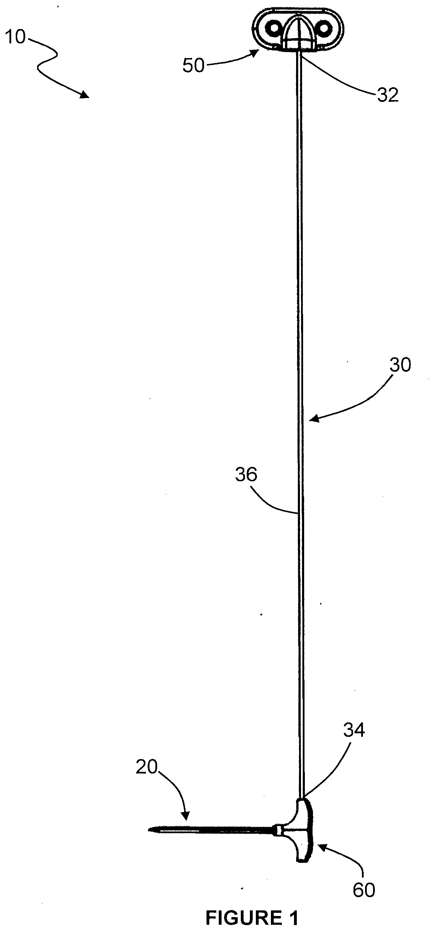

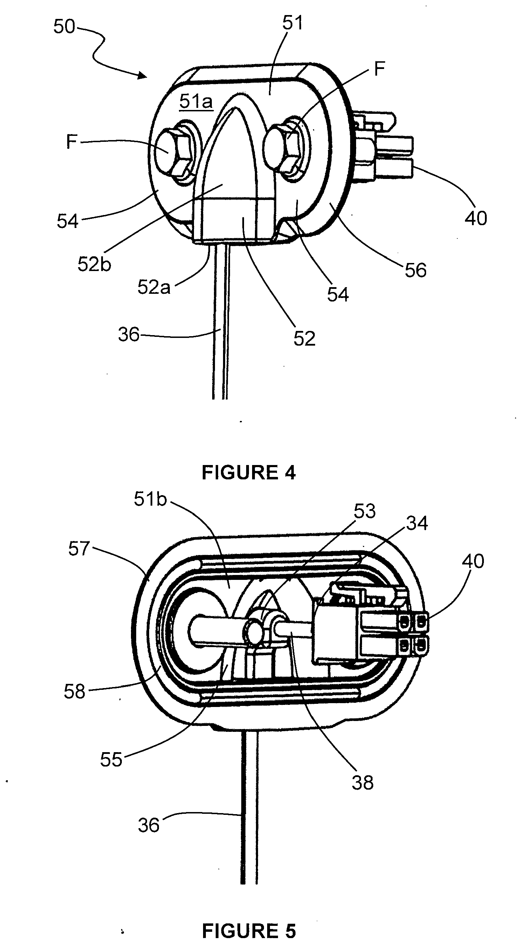

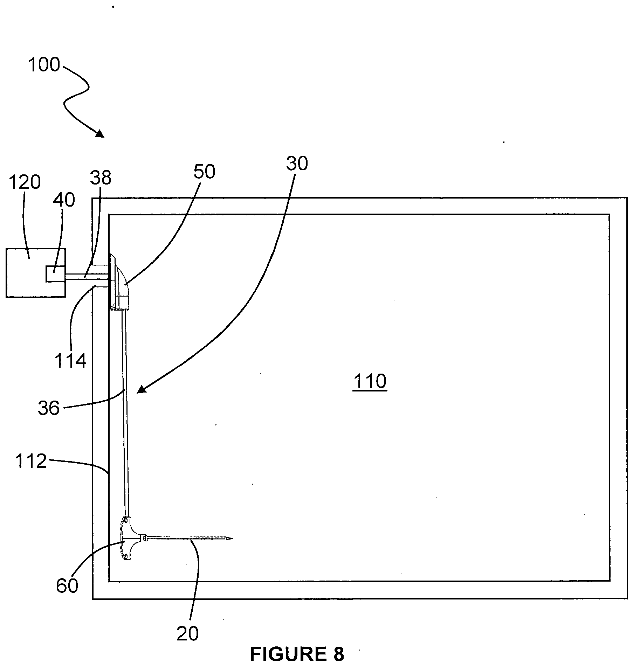

Referring now to Figure 1, there is shown a core probe assembly 10 for use in a cooking appliance, in the form of an oven 100 (Figure 8) in this embodiment. The core probe assembly 10 includes a core probe 20 which comprises a temperature sensor configured to measure the core temperature of a food product as it is being cooked. A cable 30 has a first end 32 connected to the core probe 20 and a second end 34 connected to a connector 40 (Figures 4 and 5). The connector 40 is a male connector in this embodiment and is configured to operatively connect the core probe 20 to a control unit of a cooking appliance, via the cable 30, such that an operating condition of the cooking appliance can be adjusted in dependence on a temperature sensed by the core probe 20.

The core probe assembly 10 further includes a mounting 50 overmolded on the cable 30 between its first and second ends 32, 34, and is configured to be attached to an internal wall of an cooking cavity of an cooking appliance. The mounting 50 is formed of plastic in this embodiment.

The core probe assembly 10 also includes a handle 60 overmolded across the connection between the first end 32 of the cable 30 and the core probe 20. The handle 60 is formed of a high-performance thermoplastic in this embodiment and is configured to allow a user to insert the core probe 20 into a food product, in use.

As will be described in greater detail below in respect of Figure 8, the mounting 50 is configured to be attached to an internal wall of an cooking cavity, and in particular an oven cavity in this embodiment, such-that the cable 30 extends from an inside of the cooking cavity, where it is connected to the core probe 20, to an outside of the cooking cavity, where it is connected to a control unit of a cooking appliance, via the mounting 50.

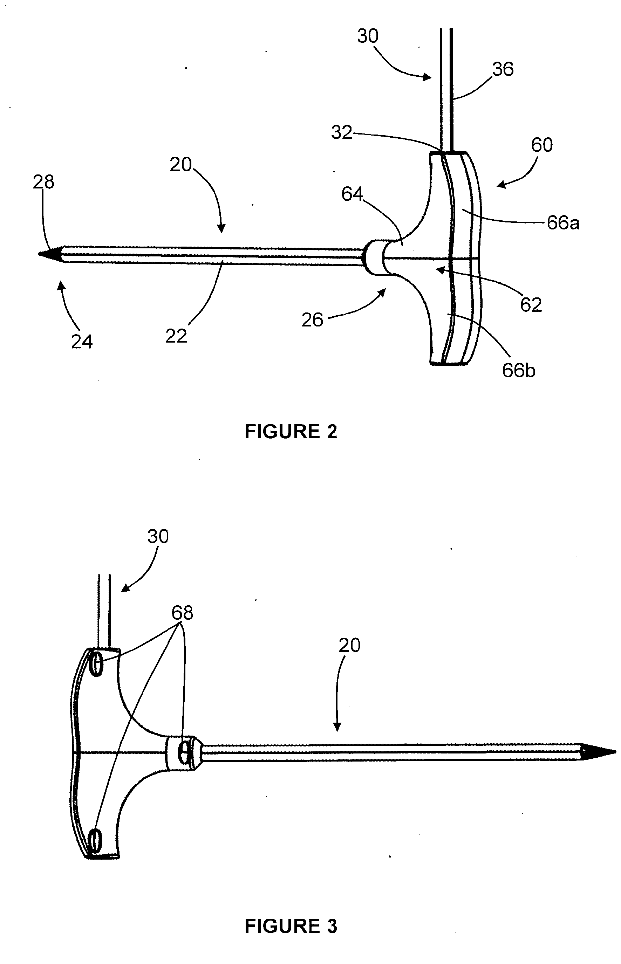

Figures 2 and 3 show the core probe 20 and handle 60 of the core probe assembly 10. The core probe 20 has an elongate body 22 formed form stainless steel in this embodiment, extending between a first, insertion end 24 and a second end 26 connected to the first end 32 of the cable 30. The first, insertion end 24 has a tapered profile 28 leading to a point to facilitate insertion of the core probe 20 into a food product, in use. The second end 26 is encased within the handle 60 such that it is not exposed to the environment of a cooking cavity, in use.

The handle 60 has a generally T-shaped body 62 having a first part 64 extending along part of the elongate body 22 of the core probe 20 and a pair of gripping arms 66a, 66b extending from either side of the first part 64. The gripping arms 66a, 66b are arranged to allow a user to grip the handle 60, in use. One side of the body 62 includes three protrusions 68, wherein a respective protrusion extends from the first part 64 and each of the pair of handles 66a, 66b. The protrusions 68 are elliptical when viewed in plan and are configured to provide a space or gap between the handle 60 and an internal wall of the cooking cavity against which the core probe 20 is positioned in order to facilitate cleaning and gripping of the core probe 10 via the handle 60, in use.

As stated above, the handle 60 is overmolded across the connection between the first end 32 of the cable 30 and the core probe 20. In this embodiment, a first portion 36 of the cable 30 extending between the first end 32 and the mounting 50 protrudes from a free end of one of the handles 66a. This portion 36 of the cable 30 and the core probe 20 extend substantially orthogonal to one another.

Figures 4 and 5 show the mounting 50 of the core probe assembly 10. The mounting 50 comprises a base 51 having a first side 51a configured to face into a cooking cavity, in use, and a second side 51b configured to face an internal wall of a cooking cavity, in use.

A cover 52 extends from the first side 51a and has a planar floor 52a that extends generally perpendicular from the first side 51a and a curved portion 52b that extends between an outer edge of the planar floor 52a and the first side 51a. The cover 52 defines a recess 55 on the second side 51b of the base 51 that allows for a constant thickness of material.

A cable guide portion 53 is located within the recess 55 and extends from the floor 52a such that, in use, it is positioned between the cover portion 52 an internal wall of a cooking cavity. The cable guide portion 53 is overmolded on the cable 30 and comprises an elbow arranged such that the first portion 36 of the cable 30 and a second portion 38 of the cable 30, extending between the mounting 50 and the second end 34, extend generally perpendicular to one another.

A pair of flanges 54 extend to either side of the cover portion 52 and have a respective aperture extending therethrough. Each aperture is in receipt of a fixing F in the form of a screw configured to attach the mounting 50 to an internal wall of a cooking cavity, in use. An outer periphery of the first side of the base 51a comprises a chamfer 56. The chamfer 56 may prevent residual food and detritus from depositing on the mounting 50 and may allow for easier cleaning. The second side of the base 51b comprises a peripheral contact surface 57 arranged to contact an internal wall of a cooking cavity, in use. A seal or gasket 58 is received in a recess located inward of the peripheral contact surface 57 on the second side 51b.

In use, the mounting 50 is configured to be attached to an internal wall of a cooking cavity such that the cable 30 extends from an inside of the cooking cavity to an outside of the cooking cavity through an opening in the internal wall, via the mounting 50. The seal of gasket 58 is arranged to provide a seal around the opening in the internal wall of the cooking cavity.

Referring now to Figure 8, there is shown a cooking appliance in the form of an oven 100 incorporating the core probe assembly 10 described above. The oven 100 includes an oven cavity 110 arranged to receive a food product for cooking. The oven cavity 110 has four internal walls 112 and an opening 114 extending through one of the internal walls 112.

A control unit 120 is located outside of the oven cavity 110 and is configured to control one or more cooking parameters of the oven 100, in use.

The mounting 50 of the core probe assembly 10 is mounted on the internal wall 112 having the opening 114, such that the seal or gasket 58 surrounds the opening 114 so as to prevent the release or escape of heat, steam or liquid from the oven cavity 110 during operation. For reasons of clarity, the fixings F are not shown in Figure 8, but it will be appreciated that the mounting 50 is attached to the internal wall 112 via the fixings F.

The core probe 20 and handle 60 are located within the oven cavity 110 and the cable 30 extends from the core probe 20, inside the oven cavity 110, to the control unit 120, outside of the oven cavity 110 via the mounting 50. More specifically, the first portion 36 of the cable 30 is located within the oven cavity 110 whilst the second portion 38 of the cable 30 extends through the opening 114 and is connected to the control unit 120 via the connector 40. The control unit 120 includes a female connector and the male connector 40 of the core probe assembly 10 is detachable from the female connector of the control unit 120.

It will be appreciated by those skilled in the art that several variations to the aforementioned embodiments are envisaged without departing from the scope of the invention.

It will also be appreciated by those skilled in the art that any number of combinations of the aforementioned features and/or those shown in the appended drawings provide clear advantages over the prior art and are therefore within the scope of the invention described herein.

## Claims

1. A core probe assembly (10) for use in a cooking appliance (100), the core probe assembly (10) comprising:
a core probe (20) and a cable (30);
wherein the core probe (20) comprises an insertion end at a first end (24) and a second end (26) connected the cable (30);
wherein the cable (30) comprises a first end (32) connected to the second end (26) of the core probe (20) and a second end (34) comprising a connector (40) for connection with a control unit (120) of a cooking appliance (100), in use;
wherein the probe assembly (10) further comprises a mounting (50) overmolded on the cable (30) between its ends (32, 34), wherein the mounting (50) is configured to be removably attached to an internal wall (112) of a cooking cavity (110) such that, in use, the cable (30) extends from an inside of the cooking cavity (110) to an outside of the cooking cavity (110) via the mounting (50).

2. A core probe assembly (10) according to claim 1, wherein the mounting (50) is formed of plastic.

3. A core probe assembly (10) according to claim 1 or claim 2, wherein the mounting (50) comprises a cable guide portion (53) configured to guide the cable through an opening (114) in an internal wall (112) of the cooking cavity (110) from inside the cooking cavity (110) to outside the cooking cavity (110).

4. A core probe assembly (10) according to claim 3, wherein the cable guide portion (53) is arranged such that a first portion (36) of the cable (30) extending from one side of the cable guide portion (53) and a second portion (38) of the cable (30) extending from another side of the cable guide portion (53) extend substantially orthogonal to one another.

5. A core probe assembly (10) according to any preceding claim, wherein the mounting (50) comprises one or more flanges (54) having a respective aperture extending therethrough, wherein each aperture is arranged to receive a fixing (F) configured to attach the mounting (50) to an internal wall (112) of a cooking cavity (110), in use.

6. A core probe assembly (10) according to claim 5, wherein the or each fixing (F) comprises a screw.

7. A core probe assembly (10) according to any preceding claim, wherein the core probe (20) comprises at least one temperature sensor.

8. A core probe assembly (10) according to any preceding claim, comprising a handle (60) overmolded across the connection between the core probe (20) and the cable (30).

9. A core probe assembly (10) according to claim 8, wherein the handle (60) is arranged such that a first portion (36) of the cable (30) extending from the handle (60), and the core probe (20) extend substantially orthogonal to one another.

10. A cooking appliance (100) comprising:
a cooking cavity (110) having an opening (114) extending through an internal wall (112) thereof; and
a core probe assembly (10) according to any claims 1 to claim 9,
wherein the mounting (50) is removably attached to the internal wall (112) of the cooking cavity (110) such that the cable (30) extends through the opening (114) from inside the cooking cavity (110) to outside the cooking cavity (110) via the mounting (50).
